# EUROPEAN PATENT APPLICATION

(11) **EP 4 694 416 A1**
(43) Date of publication of application: **11.02.2026**
(21) Application number: 23929522.3
(22) Date of filing: 31.03.2023
(51) Int. Cl.: H04W 64/00

(54) **POSITIONING METHODS, APPARATUSES, DEVICE AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN); LI, Xiaolong, Beijing 100085 (CN)
(74) Representative: Gunzelmann, Rainer
(86) International application number: PCT/CN2023/085781
(87) International publication number: WO 2024/197939

(57) **Abstract**

Disclosed in the embodiments of the present disclosure are positioning methods, apparatuses, a device, a chip system and a storage medium, which can be applied to a communication system. A method comprises: a core network device can determine positioning signal configuration information related to an effective area, wherein the positioning signal configuration information is used for positioning a terminal device. Implementing the methods of the present disclosure can effectively determine the positioning signal configuration information related to the effective area, thus improving the positioning effect of the terminal device.

## Description

### TECHNICAL FIELD

The present disclosure relates to a field of communication technology, and specifically to a positioning method and apparatus, a device and a storage medium.

### BACKGROUND

In some application scenarios, positioning of a user equipment (UE) may be supported, for example, determining the position of the UE while in a radio resource control (RRC) inactive state (RRC_INACTIVE). Based on some communication protocols, the UE may be supported to use same positioning signal configuration information within a certain area without needing to request new positioning signal configuration information from a network device due to moving to a new cell. The positioning signal configuration information is determined by a serving cell, and positioning signal configuration information associated with a valid area involves uplink resource usage of all cells within the valid area.

In the related art, the positioning signal configuration information associated with the valid area cannot be effectively determined, which influences a positioning effect of the UE.

### SUMMARY

Embodiments of the present disclosure provide a positioning method and apparatus, a device, a chip system, a storage medium, a computer program, and a computer program product, applicable to a field of communication technology, which may effectively determine positioning signal configuration information associated with a valid area and improve a positioning effect of a terminal.

According to a first aspect, embodiments of the present disclosure provide a positioning method, performed by a core network device. The method includes: determining positioning signal configuration information associated with a valid area, in which the positioning signal configuration information is configured to position a terminal.

According to a second aspect, embodiments of the present disclosure provide a positioning method, performed by a first access network device. The method includes: determining available positioning signal configuration information, in which the available positioning signal configuration information is for a core network device to determine positioning signal configuration information associated with a valid area; and/or determining positioning signal configuration information associated with a valid area, in which the positioning signal configuration information is configured to position a terminal.

According to a third aspect, embodiments of the present disclosure provide a positioning method, performed by a second access network device. The method includes: determining available positioning signal configuration information, in which the available positioning signal configuration information is for a first access network device to determine positioning signal configuration information associated with a valid area, and the positioning signal configuration information is configured to position a terminal.

According to a fourth aspect, embodiments of the present disclosure provide a communication device. The communication device has some or all of the functions of the core network device in the method in the above first aspect, for example, the communication device may have the functions in some or all of the embodiments of the present disclosure or may have the functions for independently implementing any one of the embodiments of the present disclosure. The functions may be realized by hardware or by executing corresponding software by hardware. The hardware or software includes one or more units or modules corresponding to the above functions.

Optionally, in an embodiment of the present disclosure, the communication device may include a transceiver module and a processing module, in which the processing module is configured to support the communication device to perform the corresponding functions in the above method, and the transceiver module is configured to support communication between the communication device and other devices. The communication device may also include a storage module, in which the storage module is configured to couple with the transceiver module and the processing module, and save computer programs and data necessary for the communication device.

As an example, the processing module may be a processor, the transceiver module may be a transceiver or a communication interface, and the storage module may be a memory.

According to a fifth aspect, embodiments of the present disclosure provide another communication device. The communication device has some or all of functions of the first access network device in the method described in above second aspect, such as functions of the communication device may have some or all of functions in the embodiments of the present disclosure, or may have functions of implementing any one of the embodiments of the present disclosure independently. The functions may be realized by hardware, or by executing corresponding software by hardware. The hardware or software includes one or more units or modules corresponding to the above functions.

Optionally, in an embodiment of the present disclosure, the communication device may include a transceiver module and a processing module, in which the processing module is configured to support the communication device to perform corresponding functions in the above method, and the transceiver module is configured to support communication between the communication device and other devices. The communication device may also include a storage module, in which the storage module is configured to couple with the transceiver module and the processing module, and save computer programs and data necessary for the communication device.

According to a sixth aspect, embodiments of the present disclosure provide another communication device. The communication device has some or all of functions of the second access network device in method examples in the third aspect. For example, the functions of the communication device may include some or all of functions in the embodiments of the present disclosure and may also include functions of implementing any one of the embodiments of the present disclosure independently. The functions may be realized by hardware, or by executing corresponding software by hardware. The hardware or software includes one or more units or modules corresponding to the above functions.

Optionally, in an embodiment of the present disclosure, the communication device may include a transceiver module and a processing module, in which the processing module is configured to support the communication device to perform corresponding functions in the above method, and the transceiver module is configured to support communication between the communication device and other devices. The communication device may also include a storage module, in which the storage module is configured to couple with the transceiver module and the processing module, and save computer programs and data necessary for the communication device.

According to a seventh aspect, embodiments of the present disclosure provide a communication device including a processor. When a computer program in a memory is called by the processor, the positioning method in the first aspect is implemented.

According to an eighth aspect, embodiments of the present disclosure provide a communication device including a processor. When a computer program in a memory is called by the processor, the positioning method in the second aspect is implemented.

According to a ninth aspect, embodiments of the present disclosure provide a communication device including a processor. When a computer program in a memory is called by the processor, the positioning method in the third aspect is implemented.

According to a tenth aspect, embodiments of the present disclosure provide a communication device, including a processor and a memory for storing a computer program. When the computer program stored in the memory is executed by the processor, the communication device is caused to implement the positioning method in the above first aspect.

According to an eleventh aspect, the embodiments of the present disclosure provide a communication device, including a processor and a memory for storing a computer program. When the computer program stored in the memory is executed by the processor, the communication device is caused to implement the positioning method in the above second aspect.

According to a twelfth aspect, embodiments of the present disclosure provide a communication device, including a processor and a memory for storing a computer program. When the computer program stored in the memory is executed by the processor, the communication device is caused to implement the positioning method in the above third aspect.

According to a thirteenth aspect, embodiments of the present disclosure provide a communication device, including a processor and an interface circuit. The interface circuit is configured to receive code instructions and transmit the code instructions to the processor, and the processor is configured to run the code instructions to cause the device to implement the positioning method in the first aspect above.

According to a fourteenth aspect, embodiments of the present disclosure provide a communication device, including a processor and an interface circuit. The interface circuit is configured to receive code instructions and transmit the code instructions to the processor, and the processor is configured to run the code instructions to cause the device to implement the positioning method in the second aspect above.

According to a fifteenth aspect, embodiments of the present disclosure provide a communication device, including a processor and an interface circuit. The interface circuit is configured to receive code instructions and transmit the code instructions to the processor, and the processor is configured to run the code instructions to cause the device to implement the positioning method in the third aspect above.

According to a sixteenth aspect, embodiments of the present disclosure provide a communication system. The system includes the communication device in the fourth aspect, the communication device in the fifth aspect, and the communication device in the sixth aspect, or the system includes the communication device in the seventh aspect, the communication device in the eighth aspect, and the communication device in the ninth aspect, or the system includes the communication device in the tenth aspect, the communication device in the eleventh aspect, and the communication device in the twelfth aspect, or the system includes the communication device in the thirteenth aspect, the communication device in the fourteenth aspect, and the communication device in the fifteenth aspect.

According to a seventeenth aspect, embodiments of the present disclosure provide a computer-readable storage medium for storing instructions used by the core network device, the first access network device, or the second access network device. When the instructions are executed, the core network device, the first access network device, or the second access network device is caused to implement the positioning method above.

According to an eighteenth aspect, the present disclosure further provides a computer program product including a computer program. When the computer program is running on a computer, the computer is caused to implement the positioning method above.

According to a nineteenth aspect, the present disclosure provides a chip system. The chip system includes at least one processor and at least one interface, configured to support a core network device to implement the functions in the first aspect, for example, determining or processing at least one of data and information in the above method.

In a possible design, the chip system further includes a memory for saving computer programs and data necessary for the core network device. The chip system may be composed of a chip, or may include a chip and other discrete devices.

According to a twentieth aspect, the present disclosure provides a chip system. The chip system includes at least one processor and at least one interface, configured to support the first access network device to implement the functions in the second aspect, for example, determining or processing at least one of data and information in the above method.

In a possible design, the chip system further includes a memory for saving computer programs and data necessary for the first access network device. The chip system may be composed of a chip, or may include a chip and other discrete devices.

According to a twenty-first aspect, the present disclosure provides a chip system. The chip system includes at least one processor and at least one interface, configured to support the second access network device to implement the functions in the third aspect, for example, determining or processing at least one of data and information in the above method.

In a possible design, the chip system further includes a memory for saving computer programs and data necessary for the second access network device. The chip system may be composed of a chip, or may include a chip and other discrete devices.

According to a twenty-second aspect, the present disclosure provides a computer program. When the computer program is running on a computer, the computer is caused to implement the positioning method above.

In summary, the positioning method and apparatus, the device, the chip system, the storage medium, the computer program, and the computer program product provided by the embodiments of the present disclosure may achieve following technical effects.

The core network device may determine the positioning signal configuration information associated with the valid area, in which the positioning signal configuration information is configured to position the terminal. This effectively determines the positioning signal configuration information associated with the valid area, thus improving the positioning effect of the terminal.

### BRIEF DESCRIPTION OF THE DRAWINGS

In order to more clearly illustrate the technical solution in embodiments of the disclosure or the background, the accompanying drawings to be used in embodiments of the disclosure or the background will be described below.
FIG. 1 is a schematic diagram of an architecture of a communication system according to an embodiment of the present disclosure.
FIG. 2 is a flowchart of a positioning method according to an embodiment of the present disclosure.
FIG. 3a is a flowchart of a positioning method according to an embodiment of the present disclosure.
FIG. 3b is a flowchart of a positioning method according to an embodiment of the present disclosure.
FIG. 3c is a flowchart of a positioning method according to an embodiment of the present disclosure.
FIG. 4 is a flowchart of another positioning method according to an embodiment of the present disclosure.
FIG. 5a is a flowchart of another positioning method according to an embodiment of the present disclosure.
FIG. 5b is a flowchart of another positioning method according to an embodiment of the present disclosure.
FIG. 5c is a flowchart of another positioning method according to an embodiment of the present disclosure.
FIG. 6a is a flowchart of another positioning method according to an embodiment of the present disclosure.
FIG. 6b is a flowchart of another positioning method according to an embodiment of the present disclosure.
FIG. 7 is a flowchart of another positioning method according to an embodiment of the present disclosure.
FIG. 8 is a flowchart of another positioning method according to an embodiment of the present disclosure.
FIG. 9 is a flowchart of another positioning method according to an embodiment of the present disclosure.
FIG. 10 is a flowchart of yet another positioning method according to an embodiment of the present disclosure.
FIG. 11 is a flowchart of yet another positioning method according to an embodiment of the present disclosure.
FIG. 12 is a flowchart of still yet another positioning method according to an embodiment of the present disclosure.
FIG. 13 is a block diagram of a communication device according to an embodiment of the present disclosure.
FIG. 14 is a block diagram of another communication device according to an embodiment of the present disclosure.
FIG. 15 is a block diagram of a chip according to an embodiment of the present disclosure.

### DETAILED DESCRIPTION

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all implementations consistent with the embodiments of the present disclosure. Instead, they are merely examples of devices and methods consistent with aspects of embodiments of the disclosure as detailed in the appended claims.

The terms used in the embodiments of disclosure is merely for the purpose of describing a specific embodiment, and is not intended to limit embodiments of the disclosure. As used in embodiments of the disclosure and the appended claims, a singular form "a/an" or "the/said" is also intended to include plural forms, unless the context clearly indicates other meaning. It should also be understood that the term "and/or" as used herein refers to including any or all possible combinations of one or more associated listed items.

It should be understood that although the terms such as "first, second, third" may be used in embodiments of the disclosure to describe various kinds of information, the information should not be limited to these terms. These terms are merely used to distinguish a same type of information from each other. For example, without departing from a scope of embodiments of the disclosure, first information may also be called second information, and similarly, the second information may also be called first information. Depending on the context, the word "if" as used herein may be interpreted as "when" or "in a case that..." or "in response to a determination".

To facilitate understanding, terms involved in the present disclosure are first introduced.

### 1. Radio Resource Control (RRC)

Radio resource control, also known as radio resource management (RRM) or radio resource allocation (RRA), refers to management, control and scheduling of radio resources via certain strategies and means. The RRC aims to make full use of limited wireless network resources as much as possible while meeting the requirement of service quality, ensuring reaching a planned coverage area, and improving a service capacity and resource utilization as much as possible.

### 2. Location Management Function (LMF)

LMF, located at a local side of a radio access network (RAN) or a core network (CN) side, is used to provide a location management function service to the UE.

To better understand the positioning method in the embodiments of the present disclosure, the communication system applicable to the embodiments of the present disclosure is firstly described.

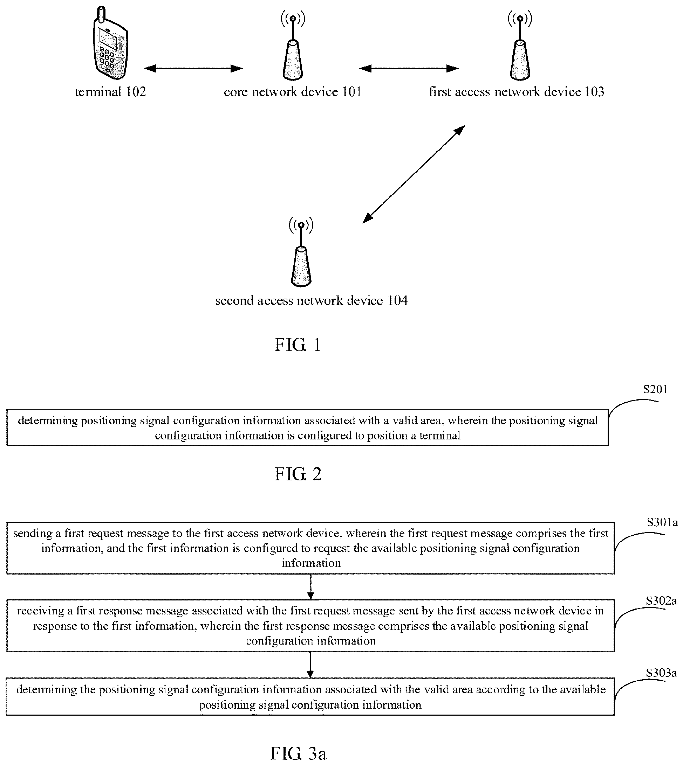

Please refer to FIG. 1, which is a schematic diagram of an architecture of a communication system according to an embodiment of the present disclosure. The communication system may include but is not limited to three network devices and one terminal. The number and form of devices shown in FIG. 1 are only shown as an example and do not limit the embodiments of the present disclosure. In an actual application, there may be two or more than two network devices and two or more than two terminals. The communication system in FIG. 1 including one core network device 101, one terminal 102, one first access network device 103, and one second access network device 104 is shown as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future.

The network device (which may include a core network device and/or an access network device) in the embodiments of the present disclosure is an entity on a network side for transmitting or receiving signals. For example, the network device 101 may be an evolved NodeB (eNB), a transmission reception point (TRP), or a next generation NodeB (gNB) in the NR system, a base station in other future mobile communication systems, or an access node in wireless fidelity (Wi-Fi) systems. The embodiments of the disclosure do not limit the specific technology and the specific device form used by the network device.

The network device in the embodiments of the disclosure includes a central unit (CU) and a distributed unit (DU), in which the CU may also be called a control unit. The structure of CU-DU may be used to separate protocol layers of the network device, for example, a base station, so that some of the functions of the protocol layers are centrally controlled by the CU, and the remaining part or all of the functions of the protocol layers are distributed in the DU, which is centrally controlled by the CU.

The terminal 102 in the embodiments of the present disclosure is an entity on the user side for receiving or sending signals, such as a mobile phone. The terminal may also be called a terminal device, a user equipment (UE), a mobile station (MS), a mobile terminal (MT), etc. The terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc.

The embodiments of the present disclosure do not limit a specific technology and a specific device form used by the terminal.

It may be understood that the communication system in the embodiments of the present disclosure is intended to illustrate the technical solution in the embodiments of the present disclosure more clearly, and does not constitute a limitation on the technical solution in the embodiments of the present disclosure. Those skilled in the art may know that the technical solution in the embodiments of the present disclosure is equally applicable to similar technical problems, with the evolution of the system architecture and the emergence of new service scenarios.

The positioning method and device provided by the present disclosure are described in detail below with reference to accompanying drawings. FIG. 2 is a flowchart of a positioning method according to an embodiment of the present disclosure, and the method is performed by a core network device. The positioning method in the present embodiment may be applied to the core network device, which may be a node device for location management. The core network device is used to provide a location management service. For example, the core network device may be a location management function (LMF) entity, which is not limited.

As shown in FIG. 2, the method may include but is not limited to the following step.

At S201, positioning signal configuration information associated with a valid area is determined, in which the positioning signal configuration information is configured to position a terminal.

In some embodiments, a positioning signal may be, for example, a sounding reference signal (SRS), a positioning reference signal (PRS), or any other possible signal for positioning a UE, which is not limited.

In some embodiments, the UE may use same positioning signal configuration information within a certain area for positioning. The certain area may be an optional example of the valid area, which is not limited.

In some embodiments, the positioning signal configuration information may refer to information used to configure the positioning signal. The positioning signal configuration information is used to configure the positioning signal, and the configured positioning signal is used to position the terminal, which is not limited.

In some embodiments, there may be one or more pieces of positioning signal configuration information associated with the valid area, which is not limited.

In some embodiments, the positioning signal configuration information may be used to position the terminal in an inactive state or an idle state, which is not limited.

In some embodiments, the positioning signal configuration information may be used for continuous positioning of the terminal in an inactive state or an idle state. In a continuous positioning process, the terminal may not switch to a connected state, which is not limited.

In some embodiments, the positioning signal configuration information may be used for continuous positioning of the terminal in an inactive state or an idle state within the valid area. In a continuous positioning process, the terminal may not switch to a connected state, which is not limited.

In some embodiments, the LMF entity may determine one or more SRS configurations for a specific area. The SRS configuration for the specific area may be an optional example of the positioning signal configuration information associated with the valid area, and the specific area may be an optional example of the valid area, which is not limited.

In this embodiment, the core network device may determine the positioning signal configuration information associated with the valid area, in which the positioning signal configuration information is configured to position the terminal, which effectively determines the positioning signal configuration information associated with the valid area, and improves a positioning effect of the terminal.

In the positioning method provided by the embodiments of the present disclosure, the core network device may receive available positioning signal configuration information sent by a first access network device; and determine the positioning signal configuration information associated with the valid area according to the available positioning signal configuration information, which effectively determines the positioning signal configuration information associated with the valid area and/or the valid area.

In some embodiments, the first access network device may be, for example, a base station or a gNB-CU (gNB central unit), which is not limited. In some embodiments, the available positioning signal configuration information may be, for example, the available positioning signal configuration information of the first access network device, which is not limited. In some embodiments, the available positioning signal configuration information may be, for example, positioning signal configuration information available within a coverage area of the first access network device, such as an available SRS configuration or an available PRS configuration, which is not limited.

In some embodiments, the LMF entity may determine one or more SRS configurations for a specific area based on available SRS configuration information received from a base station. The available SRS configuration information may be an optional example of the available positioning signal configuration information, which is not limited.

In some embodiments, the core network device may select the positioning signal configuration information associated with the valid area from the available positioning signal configuration information, which is not limited.

In some embodiments, the core network device may also determine the positioning signal configuration information associated with the valid area based on the available positioning signal configuration information in any other possible manner, which is not limited.

In the positioning method provided by the embodiments of the present disclosure, the core network device may send first information to the first access network device, in which the first information is configured to request the available positioning signal configuration information, and receive the available positioning signal configuration information sent by the first access network device in response to the first information. This enables timely requesting and obtaining the available positioning signal configuration information, achieves on-demand acquisition of the available positioning signal configuration information, and effectively expands application scenarios of the positioning method.

In some embodiments, the LMF entity may send information used to request an available SRS configuration to the base station. The information used to request the available SRS configuration may be an optional example of the first information, which is not limited.

In some embodiments, the LMF entity may also receive the available SRS configuration information from the base station, which is not limited.

In the positioning method provided by the embodiments of the present disclosure, the first information includes one or more of: an available positioning signal request indication, requested cell information, requested bandwidth part (BWP) information, requested frequency band information, a requested resource type, and requested time information, which is not limited.

In some embodiments, the first information may be, for example, the information used to request the available SRS configuration. The information used to request the available SRS configuration may include one or more of: an available SRS request indication, requested cell information, requested BWP information, requested frequency band information, a requested resource type, and requested time information, which is not limited.

In some embodiments, the requested cell information may include one or more cell identity documents (IDs). The cell ID may be a cell global identity (CGI) and/or a physical cell identifier (PCI), which is not limited.

In some embodiments, the requested BWP information may be a request indication or specific requested parameters, including but not limited to location and bandwidth, subcarrier spacing, and/or cyclic prefix, which is not limited.

In some embodiments, the requested frequency band information may be, for example, frequency range 1 (FR1), FR2, or any possible bandwidth, which is not limited.

In an embodiment, the requested resource type may be, for example, a periodic type or an aperiodic type, which is not limited.

In an embodiment, the requested time information may be, for example, a time period in which a resource is requested to use, including a start time, a duration, and/or an end time, which is not limited.

In the positioning method provided by the embodiments of the present disclosure, the available positioning signal configuration information may include available positioning signal configurations, in which each available positioning signal configuration includes one or more of available time information and cell information, which is not limited.

In some embodiments, the available SRS configuration information includes one or more available SRS configurations. Optionally, each SRS configuration includes the available time information and/or the cell information. The available SRS configuration information may be an optional example of the available positioning signal configuration information. The available SRS configuration may be an optional example of the available positioning signal configuration, which is not limited.

FIG. 3a is a flowchart of a positioning method according to an embodiment of the present disclosure, and the method is performed by a core network device. The positioning method in this embodiment may be applied to the core network device, which is not limited.

As shown in FIG. 3a, the method may include but is not limited to following steps.

At S301a, a first request message is sent to the first access network device, in which the first request message includes first information, and the first information is configured to request available positioning signal configuration information.

In some embodiments, a request message for transmitting the first information may be referred to as the first request message, which is not limited.

In some embodiments, the first request message is a non-terminal related request message, which is not limited.

**In** some embodiments, the non-terminal related request message may be a transmission and reception point (TRP) information request message or a positioning signal information request message. An existing request message may be reused to request the available positioning signal configuration information, which may effectively reduce transmission overhead of the available positioning signal configuration information.

**In** some embodiments, the LMF may send the first request message to the base station to request the available positioning signal configuration information from the base station, which is not limited.

In some embodiments, the positioning signal information request message may be, for example, an SRS information request message, which is not limited.

**At** S302a, a first response message associated with the first request message sent by the first access network device in response to the first information is received, in which the first response message includes the available positioning signal configuration information.

**In** some embodiments, the first access network device may feed back the first response message to the core network device in response to the first information. The first response message is a response message generated in response to the first request message and may include the available positioning signal configuration information, which is not limited.

**At** S303a, positioning signal configuration information associated with a valid area is determined according to the available positioning signal configuration information.

In some embodiments, after receiving the first response message, the core network device may parse the available positioning signal configuration information from the first response message and determine the positioning signal configuration information associated with the valid area, which is not limited.

Thus, in this embodiment, the positioning signal configuration information associated with the valid area may be effectively determined, which improves the positioning effect of the terminal. The core network device sends the first request message to the first access network device and receives the first response message associated with the first request message sent by the first access network device in response to the first information, so as to determine the available positioning signal configuration information. This effectively enhances timeliness of obtaining the available positioning signal configuration information and facilitates timely determination of the positioning signal configuration information associated with the valid area.

In some embodiments, the LMF entity may request and receive the available SRS configuration information via a non-UE related message, and the non-UE related message may be an optional example of the non-terminal related request message, which is not limited.

In some embodiments, the LMF entity may request and receive the available SRS configuration information via a TRP information exchange procedure, which is not limited.

**In** some embodiments, the LMF sends a TRP information request message to the base station, in which the TRP information request message may include information for requesting the available SRS configuration. The base station includes the available SRS configuration information in the TRP information response message based on the information used to request the available SRS configuration, which is not limited.

**In** some embodiments, the LMF entity may also request and receive the available SRS configuration information via a new procedure, which is not limited.

**In** some embodiments, the LMF entity may send an SRS information request message to the base station, in which the SRS information request message includes information for requesting the available SRS configuration. The base station includes the available SRS configuration information in the SRS information response message based on the information for requesting the available SRS configuration, which is not limited.

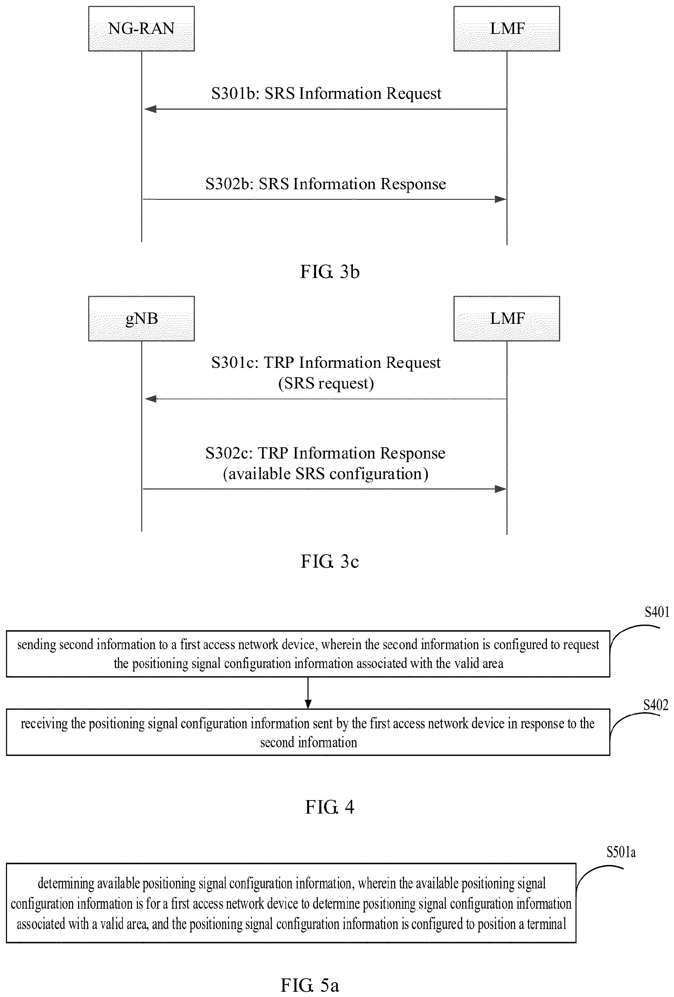

**FIG.** 3b is a flowchart of a positioning method according to an embodiments of the present disclosure.

In this embodiment, taking the core network device as an LMF entity and the first access network device as a next generation-radio access network (NG-RAN) for illustration, which is not limited.

As shown in FIG. 3b, the method may include but is not limited to following steps.

**At** S301b, the LMF sends an SRS information request to an NG-RAN, in which the SRS information request is configured to request an available SRS resource on the NG-RAN.

In some embodiments, the SRS information request may be an optional example of the first request message, which is not limited.

In some embodiments, the available SRS resource may be an optional example of the available SRS configuration information, which is not limited.

In some embodiments, the available SRS resource is configured to determine an SRS configuration for the valid area, which is not limited.

In some embodiments, the SRS information request includes at least one of: an available SRS request indication, requested cell information, requested BWP information, requested frequency band information, a requested resource type, or requested time information, which is not limited.

At S302b, an NG-RAN node sends SRS information feedback to the LMF based on the SRS information request.

The NG-RAN node may be an optional example of the first access network device, which is not limited.

In some embodiments, the SRS information feedback may also be referred to as an SRS information response, which is not limited.

In some embodiments, the SRS information feedback includes one or more pieces of available SRS configuration information, which is not limited.

**In** some embodiments, the available SRS configuration information may include one or more SRS configurations, each of which may include available time information and/or cell information, which is not limited.

**In** some embodiments, the LMF determines an area SRS configuration for positioning the UE based on the one or more pieces of available SRS configuration information. The area SRS configuration is an optional example of the positioning signal configuration information, which is not limited.

FIG. 3c is a flowchart of a positioning method according to an embodiment of the present disclosure.

In this embodiment, taking the core network device as an LMF entity and the first access network device as a base station (gNB) for illustration, which is not limited.

As shown in FIG. 3c, the method may include but is not limited to following steps.

At S301c, an LMF sends a TRP information request message to a gNB.

In some embodiments, the TRP information request message is an optional example of the first request message, which is not limited.

In some embodiments, the TRP information request message includes SRS request information. The SRS request information is configured to request the available SRS configuration information and is an optional example of the first information, which is not limited.

**In** some embodiments, the SRS request information includes at least one of: an available SRS request indication, requested cell information, requested BWP information, requested frequency band information, a requested resource type, or requested time information, which is not limited.

In an embodiment, a new request type may be added to the TRP information type in the TRP information request message. The new request type may be, for example, SRS or area SRS, for requesting the available SRS configuration, which is not limited.

That is, the SRS request information may be configured to be included in the TRP information type, which is not limited.

In another embodiment, a new information element (IE) may be added to the TRP information request message, such as SRS request or Area SRS request, for requesting available SRS configurations, which is not limited.

That is, the SRS request information may be configured to be included in the TRP information request message, which is not limited.

**At** S302c, a base station sends a TRP information response message to the LMF based on the SRS request information, in which the TRP information response message includes available SRS configuration information.

The base station (NG-RAN node) may determine the available SRS configuration information based on the SRS request information in the TRP information request message and include the available SRS configuration information in the TRP information response message to feed back to the LMF, which is not limited.

**In** some embodiments, the available SRS configuration is included in TRP information, which is not limited.

As shown in Table 1 below, Table 1 illustrates an IE including available SRS configuration information of a specific area within the SRS configuration information associated with the valid area.

**Table 1**

| IE/Group Name | Presence | Range | IE Type and Reference | Semantics Description |
|---|---|---|---|---|
| SRS configuration | M | | 9.2.28 | |
| NR PCI | O | | INTEGER (0..1007) | |
| NR CGI | O | | 9.2.6 | |
| Available time duration | O | | | |

IE represents information element, Group Name represents a name of a group, SRS configuration represents a configuration of an SRS, NR PCI represents a physical cell identifier (PCI) of a 5G new radio (NR) system, NR CGI represents a cell global identifier (CGI) of an NR system, available time duration represents an optional time range, M represents mandatory, O represents optional, Presence represents presence/occurrence, Range represents a range, IE Type and Reference represents a type and reference of an IE, INTEGER represents an integer, Semantics Description represents a semantic description, which is not limited.

In the positioning method provided by the embodiments of the present disclosure, the first access network device may be a gNB-CU, and the second access network device may be a gNB-DU, which is not limited.

In some embodiments, the gNB-CU may request available SRS configuration from the gNB-DU, which is not limited.

In some embodiments, the gNB-DU may send the available SRS configuration to the gNB-CU, which is not limited.

In some embodiments, the gNB-CU may request the available SRS configuration from the gNB-DU, and then the gNB-DU sends the available SRS configuration to the gNB-CU, which is not limited.

FIG. 4 is a flowchart of another positioning method according to an embodiment of the present disclosure, and the method is performed by a core network device. The positioning method in this embodiment may be applied to the core network device, which is not limited.

As shown in FIG. 4, the method may include but is not limited to following steps.

At S401, second information is sent to a first access network device, in which the second information is configured to request positioning signal configuration information associated with a valid area.

The information configured to request the positioning signal configuration information associated with the valid area may be referred to as the second information.

In some embodiments, the second information may be, for example, the area SRS configuration request information, which is not limited.

In some embodiments, the core network device may request to obtain the positioning signal configuration information associated with the valid area from the first access network device, which is not limited.

In some embodiments, the core network device may send the area SRS configuration request information to the first access network device to request the positioning signal configuration information associated with the valid area based on the area SRS configuration request information, which is not limited.

In some embodiments, the positioning signal configuration information associated with the valid area requested by the core network device may be determined by the first access network device. For implementations where the first access network device determines the positioning signal configuration information associated with the valid area, please refer to subsequent embodiments.

In the positioning method provided by this embodiment of the present disclosure, the second information may include one or more of: a requested positioning signal transmission characteristic, a requested area positioning signal indication, or requested area information, which effectively improves an accuracy of requesting the positioning signal configuration information.

In some embodiments, the area SRS configuration request information includes at least one of: a requested SRS transmission characteristic, a requested area SRS indication, or requested area information, which is not limited.

In the present disclosure, "area SRS configuration" may be understood as an SRS configuration for the valid area, which is not limited.

At S402, the positioning signal configuration information sent by the first access network device in response to the second information is received.

**In** some embodiments, the first access network device may feed back the positioning signal configuration information associated with the valid area to the core network device in response to the second information, which is not limited.

Thus, the core network device may request to obtain the positioning signal configuration information associated with the valid area from the first access network device, which effectively determines the positioning signal configuration information associated with the valid area and improves the positioning effect of the terminal. In addition, the positioning signal configuration information can be obtained as needed, which can effectively improve the applicability of the positioning method.

In the positioning method provided by an embodiment of the present disclosure, the core network device may also send a second request message to the first access network device, in which the second request message includes the second information, and receive a second response message associated with the second request message sent by the first access network device in response to the second information, in which the second response message includes the positioning signal configuration information. This enhances timeliness of obtaining the positioning signal configuration information and supports reuse of an existing request message.

The request message configured to transmit the second information may be referred to as the second request message. For example, the area SRS configuration request information may be included in the positioning information request message, to transmit the area SRS configuration request information to the first access network device, which is not limited.

The response message generated by the first access network device in response to the first request message may be referred to as a second response message.

In the positioning method provided by this embodiment of the present disclosure, the second request message may be a terminal related request message, which realizes the reuse of the existing request message, thus effectively reducing transmission overhead of the available positioning signal configuration information.

In some embodiments, the second request message may be, for example, the positioning information request message, which is not limited.

In the positioning method provided by the embodiments of the present disclosure, the positioning signal configuration information includes at least one of: a positioning signal configuration, an available time of the positioning signal configuration, an area positioning signal indication, or area information, and the area information at least includes a cell identifier list, which is not limited.

In some embodiments, the available time is used to indicate an available time range of the positioning signal configuration, which is not limited.

In some embodiments, the area positioning signal indication is used to distinguish from other positioning signal configurations, which is not limited.

In some embodiments, the area information is used to indicate valid area information of the positioning signal configuration, which is not limited.

It should be noted that in the following embodiments, descriptions of methods identical or corresponding to those in the above embodiments may be found in the above embodiments and will not be repeated here.

FIG. 5a is a flowchart of another positioning method according to the embodiments of the present disclosure, and the method is performed by a first access network device. The positioning method in this embodiment may be applied to the first access network device, which may be, for example, a base station or an NG-RAN node. The first access network device may specifically be, for example, a network device serving a terminal to be positioned, which is not limited.

As shown in FIG. 5a, the method may include but is not limited to the following step.

At S501a, available positioning signal configuration information is determined, in which the available positioning signal configuration information is for a core network device to determine positioning signal configuration information associated with a valid area, and the positioning signal configuration information is configured to position a terminal.

In some embodiments, the available positioning signal configuration information determined by the first access network device can be used by the core network device to determine the positioning signal configuration information associated with the valid area, which is not limited.

In some embodiments, the available positioning signal configuration information may be available positioning signal configuration information of the first access network device, or available positioning signal configuration information of other base stations or gNB-DUs (an optional example of the second access network device), which is not limited.

In some embodiments, the available positioning signal configuration information may be available positioning signal configuration information received by a gNB-CU as the first access network device from a gNB-DU as the second access network device, in which the gNB-DU is a logical unit under the gNB-CU, which is not limited.

In some embodiments, the first access network device may receive neighboring cell available SRS configuration information from other base stations. The neighboring cell available SRS configuration information may be an optional example of the available positioning signal configuration information, which is not limited.

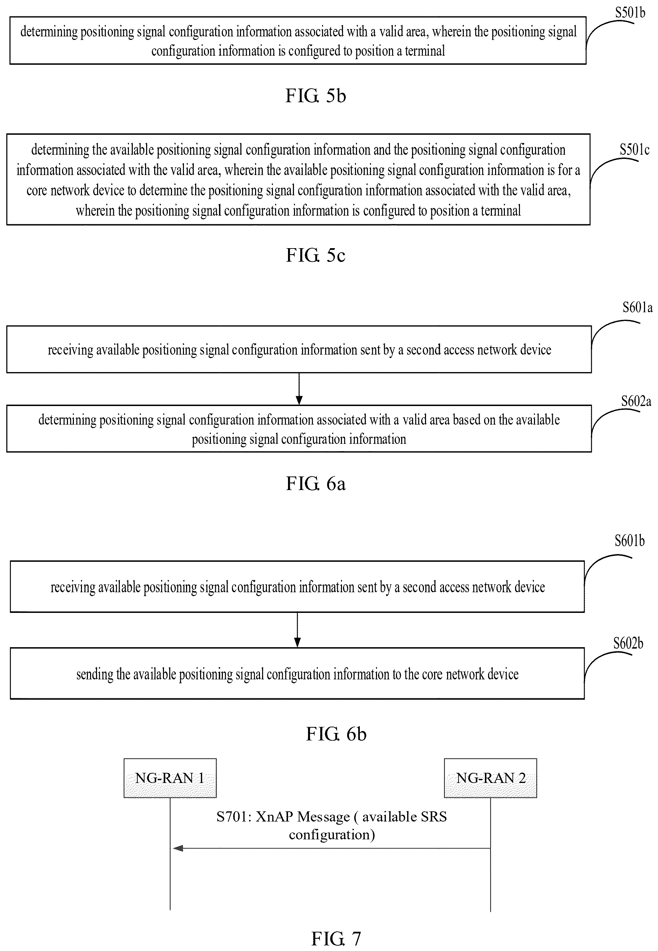

FIG. 5b is a flowchart of another positioning method according to an embodiment of the present disclosure, and the method is performed by a first access network device. The positioning method in this embodiment may be applied to the first access network device, which may be, for example, a base station or an NG-RAN node. The first access network device may specifically be, for example, a network device serving a terminal to be positioned, which is not limited.

As shown in FIG. 5b, the method may include but is not limited to the following step.

At S501b, positioning signal configuration information associated with a valid area is determined, in which the positioning signal configuration information is configured to position a terminal.

In some embodiments, the first access network device may determine the positioning signal configuration information associated with the valid area, which is not limited.

In some embodiments, the base station may determine one or more pieces of SRS configuration information for the valid area, which is not limited.

FIG. 5c is a flowchart of another positioning method according to an embodiment of the present disclosure, and the method is performed by a first access network device. The positioning method in this embodiment may be applied to the first access network device, which may be, for example, a base station or an NG-RAN node. The first access network device may specifically be, for example, a network device serving the terminal to be positioned, which is not limited.

As shown in FIG. 5c, the method may include but is not limited to a following step.

At S501c, available positioning signal configuration information and positioning signal configuration information associated with a valid area are determined, in which the available positioning signal configuration information is for a core network device to determine the positioning signal configuration information associated with the valid area, in which the positioning signal configuration information is configured to position a terminal.

In some embodiments, the first access network device may determine the available positioning signal configuration information and the positioning signal configuration information associated with the valid area, which is not limited.

Thus, in this embodiment, the first access network device may determine the available positioning signal configuration information and/or the positioning signal configuration information associated with the valid area. If the available positioning signal configuration information is determined, it is supported that the core network device determines the positioning signal configuration information associated with the valid area based on the available positioning signal configuration information, or it is also supported that the first access network device determines the positioning signal configuration information associated with the valid area. This effectively enhances flexibility in determining the positioning signal configuration information associated with the valid area, and is effectively applicable to personalized positioning scenarios.

In the positioning method of the embodiments of the present disclosure, after determining the available positioning signal configuration information, the first access network device may also send the available positioning signal configuration information to the core network device, which is not limited.

For a description of a specific transmission method, please refer to the above embodiments, which will not be repeated here.

In the positioning method of the embodiments of the present disclosure, the first access network device may receive first information sent by the core network device, in which the first information is configured to request the available positioning signal configuration information; and send the available positioning signal configuration information to the core network device in response to the first information, which is not limited.

For the first information, the method of sending the available positioning signal configuration information in response to the first information may be referred to the above embodiments, which will not be repeated here.

In the positioning method of the embodiments of the present disclosure, the first access network device may receive a first request message sent by the core network device, in which the first request message includes the first information; and send a first response message associated with the first request message to the core network device in response to the first information, in which the first response message includes the available positioning signal configuration information, which is not limited.

For the description of the first request message, sending the first response message associated with the first request message to the core network device in response to the first information, and the first response message, please refer to the above embodiments, which will not be repeated here.

In the positioning method of the embodiments of the present disclosure, the first access network device may also receive second information sent by the core network device, in which the second information is configured to request the positioning signal configuration information associated with the valid area; and send the positioning signal configuration information to the core network device in response to the second information, which is not limited.

For the description of the second information and sending the positioning signal configuration information to the core network device in response to the second information, please refer to the above embodiments, which will not be repeated here.

In the positioning method of the embodiments of the present disclosure, the first access network device may also receive a second request message sent by the core network device, in which the second request message includes the second information; and send a second response message associated with the second request message to the core network device in response to the second information, in which the second response message includes the positioning signal configuration information, which is not limited.

For the description of the second request message, sending the second response message associated with the second request message to the core network device in response to the second information, and the second response message, please refer to the above embodiments, which will not be repeated here.

FIG. 6a is a flowchart of another positioning method according to an embodiment of the present disclosure, and the method is performed by a first access network device. The positioning method in this embodiment may be applied to the first access network device, which is not limited.

As shown in FIG. 6a, the method may include but is not limited to following steps.

At S601a, available positioning signal configuration information sent by a second access network device is received.

In some embodiments, the first access network device may determine the positioning signal configuration information associated with the valid area, which is not limited.

In some embodiments, the first access network device may determine the positioning signal configuration information associated with the valid area based on the available positioning signal configuration information from the second access network device, which is not limited.

In some embodiments, the first access network device may send the available positioning signal configuration information received from the second access network device to the core network device, for the core network device to determine the positioning signal configuration information associated with the valid area, which is not limited.

In the positioning method provided by the embodiments of the present disclosure, the first access network device may receive a configuration message sent by the second access network device, in which the configuration message includes the available positioning signal configuration information, and the configuration message is a non-terminal related message. This may effectively improve timeliness of obtaining the available positioning signal configuration information.

In some embodiments, the available positioning signal configuration information (e.g., available SRS information) may be transmitted between the first access network device and the second access network device via an Xn application protocol (XnAP) interface setup message or a RAN configuration update message, which is not limited.

In some embodiments, the first access network device and the second access network device may transmit the available positioning signal configuration information (e.g., available SRS information) via an F1 application protocol (F1AP) interface setup message or a gNB-DU configuration update message, which is not limited.

In the positioning method provided by the embodiments of the present disclosure, the first access network device may receive a configuration message sent by the second access network device, in which the configuration message includes the available positioning signal configuration information, and the configuration message is a terminal related message. This may effectively improve timeliness of obtaining the available positioning signal configuration information.

In some embodiments, the first access network device and the second access network device may transmit the available positioning signal configuration information (e.g., available SRS information) via an F1AP SRS information request message or a positioning information request message, which is not limited.

At S602a, positioning signal configuration information associated with a valid area is determined based on the available positioning signal configuration information.

In some embodiments, the first access network device may directly determine the positioning signal configuration information associated with the valid area based on the available positioning signal configuration information from the second access network device, which is not limited.

In some embodiments, the first access network device may request the available positioning signal configuration information from the second access network device in response to a request (e.g., area SRS configuration request information) from the core network device (e.g., LMF entity), and determine the positioning signal configuration information associated with the valid area based on the request from the core network device and the available positioning signal configuration information, which is not limited.

In some embodiments, after determining the positioning signal configuration information associated with the valid area, the first access network device may send determined positioning signal configuration information to the core network device, which is not limited.

In some embodiments, the base station may send one or more pieces of SRS configuration information for the valid area to the LMF entity, which is not limited.

Thus, the first access network device may obtain the available positioning signal configuration information from the second access network device to determine the positioning signal configuration information associated with the valid area, thus improving accuracy of determining the signal configuration information associated with the valid area.

FIG. 6b is a flowchart of another positioning method according to an embodiment of the present disclosure, and the method is performed by a first access network device. The positioning method in this embodiment may be applied to the first access network device, which is not limited.

As shown in FIG. 6b, the method may include but is not limited to following steps.

At S601b, available positioning signal configuration information sent by a second access network device is received.

In some embodiments, the first access network device may send the available positioning signal configuration information received from the second access network device to the core network device, for the core network device to determine the positioning signal configuration information associated with the valid area, which is not limited.

In the positioning method provided by the embodiments of the present disclosure, the first access network device may receive a configuration message sent by the second access network device, in which the configuration message includes the available positioning signal configuration information, and the configuration message is a non-terminal related message. This may effectively improve timeliness of obtaining the available positioning signal configuration information.

In some embodiments, the available positioning signal configuration information (e.g., available SRS information) may be transmitted between the first access network device and the second access network device via an XnAP interface setup message or a RAN configuration update message, which is not limited.

In some embodiments, the first access network device and the second access network device may transmit the available positioning signal configuration information (e.g., available SRS information) via an F1AP interface setup message or a gNB-DU configuration update message, which is not limited.

In the positioning method provided by the embodiments of the present disclosure, the first access network device may receive a configuration message sent by the second access network device, in which the configuration message includes the available positioning signal configuration information, and the configuration message is a terminal related message. This may effectively improve timeliness of obtaining the available positioning signal configuration information.

In some embodiments, the first access network device and the second access network device may transmit the available positioning signal configuration information (e.g., available SRS information) via an F1AP SRS information request message or a positioning information request message, which is not limited.

At S602b, the available positioning signal configuration information is sent to the core network device.

In some embodiments, the first access network device may request the available positioning signal configuration information from the second access network device in response to a request (e.g., area SRS configuration request information) from the core network device (e.g., LMF entity), and send the available positioning signal configuration information received from the second access network device to the core network device, which is not limited.

Thus, the first access network device may obtain the available positioning signal configuration information from the second access network device and then send the available positioning signal configuration information to the core network device, thus enabling the core network device to determine the positioning signal configuration information associated with the valid area under a CU-DU separated RAN architecture, and improving accuracy of determining the positioning signal configuration information associated with the valid area.

FIG. 7 is a flowchart of another positioning method according to an embodiment of the present disclosure, which is not limited.

In this embodiment, taking the first access network device as NG-RAN1 and the second access network device as NG-RAN2 for illustration, a schematic diagram of an interaction between the NG-RAN1 and the NG-RAN2 is shown, which is not limited.

As shown in FIG. 7, the method may include but is not limited to a following step.

At S701, the NG-RAN 2 sends an XnAP message to the NG-RAN 1, in which the XnAP message is non-UE related and includes one or more pieces of available SRS configuration information.

In some embodiments, the available SRS configuration information includes one or more available SRS configurations, and each available SRS configuration includes available time information and/or cell information, which is not limited.

In some embodiments, the XnAP message may be an optional example of the configuration message, which is not limited.

In some embodiments, the XnAP message may be an Xn setup request message, an Xn setup response message, an RAN configuration update message, etc., which is not limited.

In some embodiments, the XnAP message may include the one or more pieces of available SRS configuration information, which is not limited.

Then, the NG-RAN 1 may determine an area SRS configuration for positioning the UE based on the one or more pieces of available SRS configuration information.

In some embodiments, the area SRS configuration for positioning the UE is an optional example of the positioning signal configuration information associated with the valid area, which is not limited.

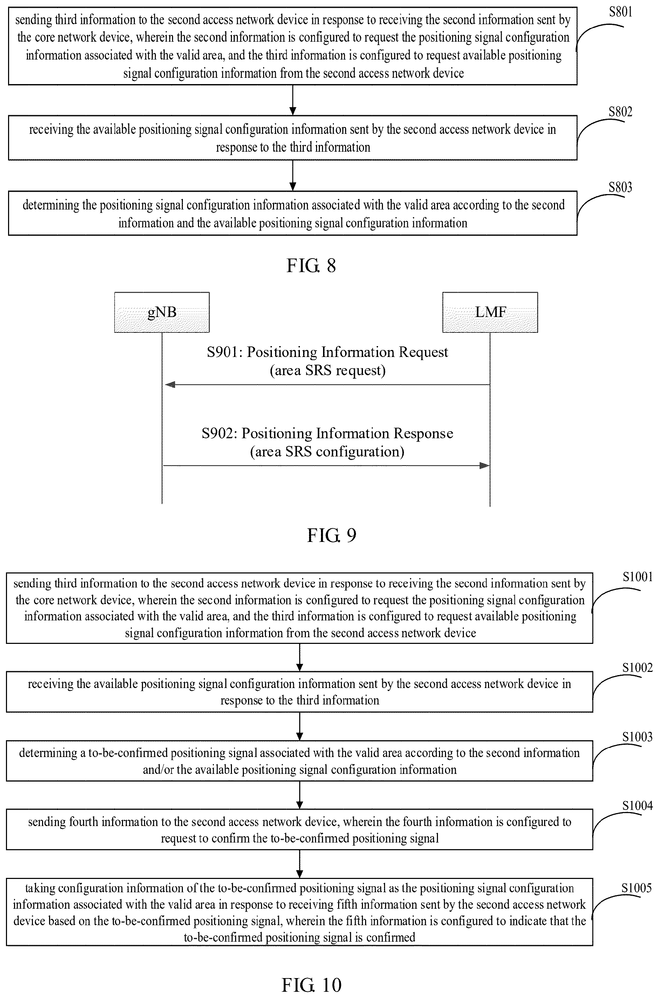

FIG. 8 is a flowchart of another positioning method according to an embodiment of the present disclosure, and the method is performed by a first access network device. The positioning method in this embodiment may be applied to the first access network device, which is not limited.

As shown in FIG. 8, the method may include but is not limited to following steps.

At S801, third information is sent to a second access network device in response to receiving second information sent by a core network device, in which the second information is configured to request positioning signal configuration information associated with a valid area, and the third information is configured to request available positioning signal configuration information from the second access network device.

In some embodiments, the first access network device may request the available positioning signal configuration information from the second access network device in response to a request (e.g., area SRS configuration request information) from the core network device (e.g., LMF entity), and determine the positioning signal configuration information associated with the valid area based on the request from the core network device and the available positioning signal configuration information, which is not limited.

In some embodiments, the first access network device (e.g., gNB-CU) may request the available positioning signal configuration information from the second access network device (e.g., gNB-DU) in response to a request (e.g., area SRS configuration request information) from the core network device (e.g., LMF entity), and send received available positioning signal configuration information to the core network device, thus determining the positioning signal configuration information associated with the valid area based on the request from the core network device and the available positioning signal configuration information, which is not limited.

In some embodiments, the second information may be, for example, the area SRS configuration request information, which is not limited.

In some embodiments, the core network device may send the area SRS configuration request information to the first access network device. In response to the area SRS configuration request information, the first access network device sends the third information to the second access network device to request the available positioning signal configuration information from the second access network device, wherein the third information is configured to request the available positioning signal configuration information from the second access network device, which is not limited.

At S802, the available positioning signal configuration information sent by the second access network device in response to the third information is received.

At S803, the positioning signal configuration information associated with the valid area is determined according to the second information and the available positioning signal configuration information.

In some embodiments, the base station (an optional example of the first access network device) may determine one or more pieces of SRS configuration information for a specific area, which is not limited.

In some embodiments, the base station may receive the area SRS configuration request information (an optional example of the second information) from the LMF entity, which is not limited.

In some embodiments, the base station receives the area SRS configuration request information from the LMF entity and may also receive neighboring cell available SRS configuration information from another base station (an optional example of the second access network device) in response to the area SRS configuration request information, which is not limited.

In some embodiments, the base station may determine the SRS configuration information associated with the valid area by combining the area SRS configuration request information from the LMF entity and the neighboring cell available SRS configuration information, which is not limited.

In some embodiments, the base station may also confirm the area SRS configuration information (an optional example of the positioning signal configuration information associated with the valid area) with the another base station, which is not limited.

In some embodiments, the another base station refers to a base station within the valid area, which is not limited.

Thus, the first access network device may flexibly and accurately determine the positioning signal configuration information associated with the valid area to support positioning of the terminal.

FIG. 9 is a flowchart of another positioning method according to an embodiment of the present disclosure.

In this embodiment, take the core network device as an LMF entity, the first access network device as a gNB, and the second access network device as another base station for illustration, which is not limited.

As shown in FIG. 9, the method may include but is not limited to following steps.

At S901, the LMF sends a positioning information request message to the gNB, in which the positioning information request message includes area SRS configuration request information, and the area SRS configuration request information is used to request an area SRS configuration.

In some embodiments, the area SRS configuration may be an optional example of the positioning signal configuration information associated with the valid area, which is not limited.

In some embodiments, the area SRS configuration request information includes one or more of: a requested SRS transmission characteristic, a requested area SRS indication, or requested area information, which is not limited.

At S902, the base station determines SRS configuration information for a specific area based on the area SRS configuration request information and/or an available SRS configuration received from another base station.

In some embodiments, the area SRS configuration request information may be an optional example of the second information, which is not limited.

In some embodiments, the available SRS configurations received from the other base station may be an optional example of the available positioning signal configuration information sent by the second access network device, which is not limited.

In some embodiments, the SRS configuration information for the specific area may be an optional example of the positioning signal configuration information associated with the valid area, which is not limited.

In some embodiments, the SRS configuration information for the specific area includes at least one of: an SRS configuration, an available time of the SRS configuration (used to indicate an available time range of the SRS configuration), an area SRS indication (used to distinguish from other SRS configurations), or area information including one or more cell lists (used to indicate valid area information of the SRS configuration), which is not limited.

FIG. 10 is a flowchart of yet another positioning method according to an embodiment of the present disclosure, and the method is performed by a first access network device. The positioning method in this embodiment may be applied to the first access network device, which is not limited.

As shown in FIG. 10, the method may include but is not limited to following steps.

At S1001, third information is sent to a second access network device in response to receiving second information sent by a core network device, in which the second information is configured to request positioning signal configuration information associated with a valid area, and the third information is configured to request available positioning signal configuration information from the second access network device.

At S1002, the available positioning signal configuration information sent by the second access network device in response to the third information is received.

At S1003, a to-be-confirmed positioning signal associated with the valid area is determined according to the second information and/or the available positioning signal configuration information.

At S1004, fourth information is sent to the second access network device, in which the fourth information is configured to request to confirm the to-be-confirmed positioning signal.

In some embodiments, the fourth information may be, for example, area SRS request information, which is not limited.

At S1005, configuration information of the to-be-confirmed positioning signal is taken as the positioning signal configuration information associated with the valid area in response to receiving fifth information sent by the second access network device based on the to-be-confirmed positioning signal, in which the fifth information is configured to indicate that the to-be-confirmed positioning signal is confirmed.

In some embodiments, the fifth information may be, for example, area SRS request confirmation information, which is not limited.

In some embodiments, the first access network device may receive a request (e.g., area SRS configuration request information) from the LMF; the first access network device determines a to-be-confirmed area SRS (an optional example of the to-be-confirmed positioning signal) based on the request and/or an available SRS configuration (which may be an optional example of the available positioning signal configuration information), and sends a to-be-confirmed request (an optional example of the fourth information) to the second access network device; the second access network device, in response to the to-be-confirmed request sent by the first access network device, includes configuration information of the to-be-confirmed area SRS in a feedback message, which is not limited.

In some embodiments, after determining that the second access network device has confirmed the to-be-confirmed positioning signal, the first access network device may use the configuration information of the to-be-confirmed positioning signal fed back by the second access network device as the positioning signal configuration information associated with the valid area, which is not limited.

In the positioning method provided by the embodiments of the present disclosure, the fifth information includes sixth information, in which the sixth information is configured to indicate configuration information that confirms support for the to-be-confirmed positioning signal, which is not limited.

In the positioning method provided by the embodiments of the present disclosure, the fifth information includes seventh information, in which the seventh information is configured to indicate cell information that confirms support for the to-be-confirmed positioning signal, which is not limited.

In the positioning method provided by the embodiments of the present disclosure, the fifth information may include the sixth information and the seventh information, in which the sixth information is configured to indicate the configuration information that confirms the support for the to-be-confirmed positioning signal, and the seventh information is configured to indicate the cell information that confirms the support for the to-be-confirmed positioning signal, which enables an effective indication that another network device has confirmed the to-be-confirmed positioning signal.

In some embodiments, the base station confirming area SRS configuration information with the other base station may involve sending the area SRS request information to the other base station via an XnAP message, which is not limited.

In some embodiments, the base station may receive the area SRS request confirmation information from the other base station via an XnAP message, which is not limited.

In some embodiments, the area SRS request confirmation information may include at least one of: the area SRS information used to indicate confirmation of support for the request, and the cell information used to indicate confirmation of support for the area SRS, which is not limited.

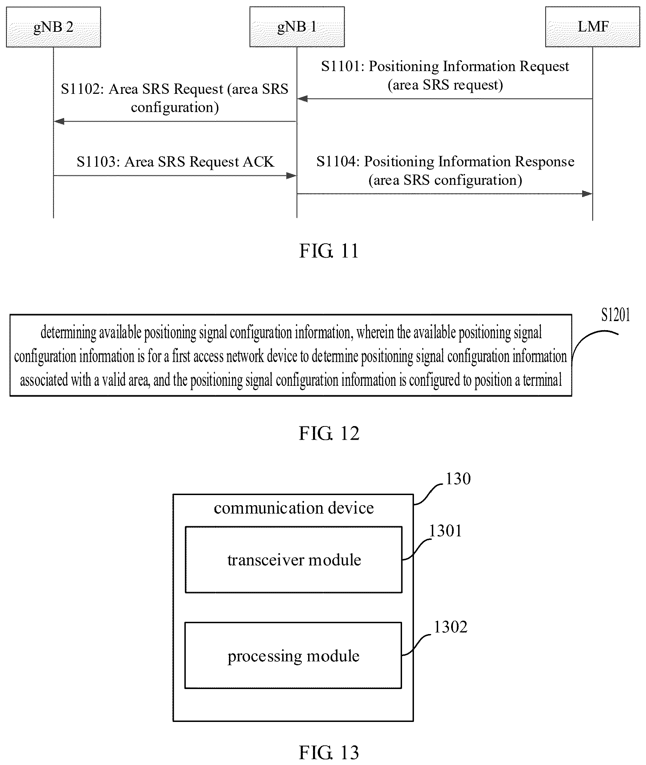

FIG. 11 is a flowchart of yet another positioning method according to an embodiment of the present disclosure.

In this embodiment, take the core network device as an LMF entity, the first access network device as gNB1, and the second access network device as gNB2 for illustration, which is not limited.

As shown in FIG. 11, the method may include but is not limited to following steps.

At S1101, the LMF sends a positioning information request message to the gNB, in which the positioning information request message includes area SRS configuration request information, and the area SRS request information is used to request an area SRS configuration.

At S1102, the gNB1 sends an area SRS request to the gNB2 based on the area SRS configuration request information.

In some embodiments, the area SRS request includes SRS configuration information of a specific area determined by the gNB1.

In some embodiments, the area SRS request may be an optional example of the fourth information, which is not limited.

At S1103, the gNB2 decides whether to agree to reserve a requested SRS resource based on the area SRS request and sends area SRS request confirmation information to the gNB1, in which the area SRS request confirmation information includes at least one of:
area SRS information used to indicate confirmation for support of the request; or
cell information used to indicate confirmation of support for the area SRS, such as one or more cell identifier lists.

At S1104, the gNB1 determines SRS configuration information of a specific area based on the area SRS request confirmation information sent by the gNB2 and sends the SRS configuration information of the specific area to the LMF entity.

In some embodiments, the SRS configuration information of the specific area may be an optional example of the positioning signal configuration information associated with the valid area, which is not limited.

In some embodiments, the gNB1 may determine area information (which may be an optional example of the positioning signal configuration information associated with the valid area) based on the area SRS request confirmation information obtained from a plurality of base stations (i.e., gNB2). For example, if the area SRS request confirmation information indicates that a cell under the gNB2 supports the area SRS configuration, the gNB1 includes a cell ID of this cell in the area information sent to the LMF entity, which is not limited.

FIG. 12 is a flowchart of still yet another positioning method according to an embodiment of the present disclosure, and the method is performed by a second access network device. The positioning method in this embodiment may be applied to the second access network device, which may be, for example, a base station or an NG-RAN node, which is not limited.

As shown in FIG. 12, the method may include but is not limited to a following step.

At S1201, available positioning signal configuration information is determined, in which the available positioning signal configuration information is for a first access network device to determine positioning signal configuration information associated with a valid area, and the positioning signal configuration information is configured to position a terminal.

In some embodiments, the available positioning signal configuration information may be determined by the second access network device, which is not limited.

In some embodiments, the second access network device determines the available positioning signal configuration information and may provide the available positioning signal configuration information to the first access network device, which is not limited.

In some embodiments, the first access network device may position a terminal the first access network device serves based on the available positioning signal configuration information provided by the second access network device.

In some embodiments, the second access network device may be, for example, the NG-RAN2 or the gNB2 in the above embodiments, which is not limited.

Thus, the second access network device determines the available positioning signal configuration information, which may effectively support the first access network device in determining the positioning signal configuration information associated with the valid area based on the available positioning signal configuration information, to assist in positioning the terminal and ensure the positioning effect of the terminal.

In the positioning method provided by the embodiments of the present disclosure, after determining the positioning signal configuration information associated with the valid area, the second access network device may send the available positioning signal configuration information to the first access network device, which is not limited.

For an implementation of the second access network device sending the available positioning signal configuration information to the first access network device, please refer to the above embodiments, which will not be repeated here.

In the positioning method provided by the embodiments of the present disclosure, the second access network device may receive third information sent by the first access network device, in which the third information is configured to request the available positioning signal configuration information; and send the available positioning signal configuration information to the first access network device in response to the third information, which is not limited.

For an implementation of the third information and sending the available positioning signal configuration information to the first access network device in response to the third information, please refer to the above embodiments, which will not be repeated here.

In the positioning method provided by the embodiments of the present disclosure, the second access network device may send a configuration message to the first access network device, in which the configuration message includes the available positioning signal configuration information, and the configuration message is a non-terminal related message, which will not be repeated here.

For an explanation of the configuration message, please refer to the above embodiments, which will not be repeated here.

In the positioning method provided by the embodiments of the present disclosure, the second access network device may also receive fourth information sent by the first access network device, in which the fourth information is configured to request to confirm a to-be-confirmed positioning signal; and send fifth information to the first access network device based on the to-be-confirmed positioning signal, in which the fifth information is configured to indicate that the to-be-confirmed positioning signal is confirmed, which is not limited.

In the positioning method provided by the embodiments of the present disclosure, the fifth information includes one or more of sixth information and seventh information, in which the sixth information is configured to indicate configuration information that confirms support for the to-be-confirmed positioning signal, and the seventh information is configured to indicate cell information that confirms support for the to-be-confirmed positioning signal, which is not limited.

For an explanation of the sixth information and the seventh information, please refer to the above embodiments, which will not be repeated here.

In the positioning method provided by the embodiments of the present disclosure, the positioning signal configuration information includes one or more of: a positioning signal configuration, an available time of the positioning signal configuration, an area positioning signal indication, or area information, in which the area information at least includes a cell identifier list, which is not limited.

In the positioning method provided by the embodiments of the present disclosure, the available positioning signal configuration information includes available positioning signal configurations, in which each available positioning signal configuration includes one or more of available time information and cell information, which is not limited.

FIG. 13 is a block diagram of a communication device according to the embodiments of the present disclosure. The communication device 130 shown in FIG. 13 may include a transceiver module 1301 and a processing module 1302. The transceiver module 1301 may include a sending module and/or a receiving module. The sending module is used to implement a sending function, and the receiving module is used to implement a receiving function. The transceiver module 1301 may implement the sending function and/or the receiving function.

The communication device 130 may be a network device (such as the core network device, the first access network device, or the second access network device in the above method embodiments), a device in the network device, or a device that may be used in combination with the network device.

For a communication device 130 on a core network device side, the device includes:
a processing module 1302, configured to determine positioning signal configuration information associated with a valid area, in which the positioning signal configuration information is configured to position a terminal.

In this embodiment, the core network device may determine the positioning signal configuration information associated with the valid area, in which the positioning signal configuration information is configured to position the terminal, which effectively determines the positioning signal configuration information associated with the valid area, and improves the positioning effect of the terminal.

For a communication device 130 on a first access network device side, the device includes:
**a** processing module 1302, configured to determine available positioning signal configuration information, in which the available positioning signal configuration information is for an access network device to determine positioning signal configuration information associated with a valid area; and/or configured to determine positioning signal configuration information associated with a valid area, in which the positioning signal configuration information is configured to position a terminal.

Thus, in this embodiment, the first access network device may determine the available positioning signal configuration information and/or the positioning signal configuration information associated with the valid area. If the available positioning signal configuration information is determined, it is supported that the core network device determines the positioning signal configuration information associated with the valid area based on the available positioning signal configuration information, or it is also supported that the first access network device determines the positioning signal configuration information associated with the valid area. This effectively enhances flexibility in determining the positioning signal configuration information associated with the valid area, and is effectively applicable to personalized positioning scenarios.

For a communication device 130 on a second access network device side, the device includes:
a processing module 1302, configured to determine available positioning signal configuration information, in which the available positioning signal configuration information is for a first access network device to determine positioning signal configuration information associated with a valid area, and the positioning signal configuration information is configured to position a terminal.

In this embodiment, the second access network device determines the available positioning signal configuration information, which may effectively support the first access network device in determining the positioning signal configuration information associated with the valid area based on the available positioning signal configuration information, to assist in positioning the terminal and ensure the positioning effect of the terminal.

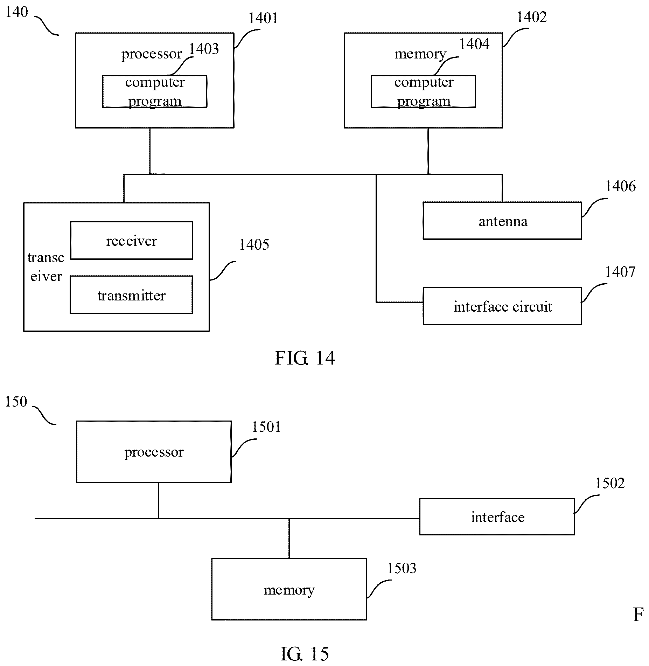

FIG. 14 is a block diagram of another communication device according to the embodiments of the present disclosure. The communication device 140 may be a network device (such as the core network device, the first access network device, or the second access network device in the above method embodiments), or a chip, a chip system, a processor, etc. that supports the network device to implement the method. The device is configured to implement the method in the above method embodiments. For details, please refer to the description in the above method embodiments.

The communication device 140 may include one or more processors 1401. The processor 1401 may be a general-purpose processor or a special-purpose processor. For example, it may be a baseband processor or a central processing unit. The baseband processor is configured to process communication protocols and communication data, and the central processor is configured to control communication devices (such as base stations, baseband chips, terminals, terminal chips, DU or CU, etc.) to execute computer programs and process computer program data.

Optionally, the communication device 140 may also include one or more memories 1402 on which a computer program 1404 is stored. The processor 1401 may store a computer program 1403. When the computer program 1404 and/or the computer program 1403 is executed by the processor 1401, the communication device 140 is caused to implement the method in the above method embodiments.

Optionally, the memory 1402 may also store data. The communication device 140 and the memory 1402 may be set separately or integrated together.

Optionally, the communication device 140 may also include a transceiver 1405 and an antenna 1406. The transceiver 1405 may be called a transceiving unit, a transceiving machine, or a transceiving circuit, etc., to achieve a transceiving function. The transceiver 1405 may include a receiver and a transmitter. The receiver may be called a receiver or a receiving circuit, etc., to achieve a receiving function; and the transmitter may be called a transmitter or a transmitting circuit, etc., to achieve a transmitting function.

Optionally, the communication device 140 includes one or more interface circuits 1407. The interface circuit 1407 is configured to receive code instructions and transmit the code instructions to the processor 1401. When the code instructions are running on the processor 1401, the communication device 140 is caused to implement the method in the above method embodiments.

In an implementation, the processor 1401 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit signals.

In an implementation, the processor 1401 may store a computer program 1403. When the computer program 1403 is running on the processor 1401, the communication device 140 is caused to implement the method in the above method embodiments. The computer program 1403 may be solidified in the processor 1401. In this way, the processor 1401 may be implemented in hardware.

In an implementation, the communication device 140 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device (such as the core network device, the first access network device, and the second access network device in the above method embodiments), but the scope of the communication device in the present disclosure is not limited to this, and the structure of the communication device may not be restricted by FIG. 14. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication device may be a chip or a chip system, please refer to FIG. 15, which is a block diagram of a chip according to the embodiments of the present disclosure. The chip in FIG. 15 includes a processor 1501 and an interface 1502. There may be one or more processors 1501, and there may be one or more interfaces 1502.

For the case where the chip is used to implement functions of the network device in the embodiments of the present disclosure (such as the core network device, the first access network device, and the second access network device in the above method embodiments):
the processor 1501 is configured to implement each step in FIGs. 2 to 12 mentioned above.

Optionally, the chip further includes a memory 1503 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

The embodiments of the present disclosure also provide a communication system. The system includes a communication device as a network device (such as the core network device, the first access network device, and the second access network device in the above method embodiments) in the above embodiments and a communication device as a network device (such as the core network device, the first access network device, and the second access network device in the above method embodiments) in the embodiments of the present disclosure.

The present disclosure also provides a readable storage medium for storing instructions. When the instructions are executed by a computer, functions of any one of the above method embodiments are performed.

The present disclosure also provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the present disclosure, but also to indicate an order of precedence.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be included within the protection scope of the present disclosure. Therefore, the protection scope of the present disclosure shall be subject to the protection scope of claims.

## Claims

1. A positioning method, performed by a core network device, comprising:
determining positioning signal configuration information associated with a valid area, wherein the positioning signal configuration information is configured to position a terminal.

2. The method of claim 1, wherein determining the positioning signal configuration information associated with the valid area comprises:
receiving available positioning signal configuration information sent by a first access network device; and
determining the positioning signal configuration information associated with the valid area according to the available positioning signal configuration information.

3. The method of claim 2, wherein receiving the available positioning signal configuration information sent by the first access network device comprises:
sending first information to the first access network device, wherein the first information is configured to request the available positioning signal configuration information; and
receiving the available positioning signal configuration information sent by the first access network device in response to the first information.

4. The method of claim 3, wherein sending the first information to the first access network device comprises:
sending a first request message to the first access network device, wherein the first request message comprises the first information;
wherein receiving the available positioning signal configuration information sent by the first access network device in response to the first information comprises:
receiving a first response message associated with the first request message sent by the first access network device in response to the first information, wherein the first response message comprises the available positioning signal configuration information.

5. The method of claim 4, wherein the first request message is a non-terminal related request message, wherein the non-terminal related request message comprises at least one of:
a transmission reception point (TRP) information request message; or
a sounding reference signal (SRS) information request message.

6. The method of any one of claims 3 to 5, wherein the first information comprises at least one of:
an available SRS request indication;
requested cell information;
requested bandwidth part (BWP) information;
requested frequency band information;
a requested resource type; or
requested time information.

7. The method of any one of claims 2 to 6, wherein the available positioning signal configuration information comprises available positioning signal configurations, wherein each available positioning signal configuration comprises at least one of:
available time information; or
cell information.

8. The method of claim 1, wherein determining the positioning signal configuration information associated with the valid area comprises:
sending second information to a first access network device, wherein the second information is configured to request the positioning signal configuration information associated with the valid area; and
receiving the positioning signal configuration information sent by the first access network device in response to the second information.

9. The method of claim 8, wherein sending the second information to the first access network device comprises:
sending a second request message to the first access network device, wherein the second request message comprises the second information;
wherein receiving the positioning signal configuration information sent by the first access network device in response to the second information comprises:
receiving a second response message associated with the second request message sent by the first access network device in response to the second information, wherein the second response message comprises the positioning signal configuration information.

10. The method of claim 9, wherein the second request message is a terminal related request message.

11. The method of any one of claims 8 to 10, wherein the second information comprises at least one of:
a requested positioning signal transmission characteristic;
a requested area positioning signal indication; or
requested area information.

12. The method of any one of claims 1 to 11, wherein the positioning signal configuration information comprises at least one of:
a positioning signal configuration;
an available time of the positioning signal configuration;
an area positioning signal indication; or
area information, wherein the area information comprises at least a cell identifier list.

13. A positioning method, performed by a first access network device, comprising:
determining available positioning signal configuration information, wherein the available positioning signal configuration information is for a core network device to determine positioning signal configuration information associated with a valid area; and/or
determining positioning signal configuration information associated with a valid area, wherein the positioning signal configuration information is configured to position a terminal.

14. The method of claim 13, further comprising:
sending the available positioning signal configuration information to the core network device.

15. The method of claim 14, wherein sending the available positioning signal configuration information to the core network device comprises:
receiving first information sent by the core network device, wherein the first information is configured to request the available positioning signal configuration information; and
sending the available positioning signal configuration information to the core network device in response to the first information.

16. The method of claim 15, wherein receiving the first information sent by the core network device comprises:
receiving a first request message sent by the core network device, wherein the first request message comprises the first information;
wherein sending the available positioning signal configuration information to the core network device in response to the first information comprises:
sending a first response message associated with the first request message to the core network device in response to the first information, wherein the first response message comprises the available positioning signal configuration information.

17. The method of claim 16, wherein the first request message is a non-terminal related request message, wherein the non-terminal related request message comprises at least one of:
a transmission reception point (TRP) information request message; or
a sounding reference signal (SRS) information request message.

18. The method of any one of claims 15 to 17, wherein the first information comprises at least one of:
an available positioning signal request indication;
requested cell information;
requested bandwidth part (BWP) information;
requested frequency band information;
a requested resource type; or
requested time information.

19. The method of claim 13, further comprising:
receiving second information sent by the core network device, wherein the second information is configured to request the positioning signal configuration information associated with the valid area; and
sending the positioning signal configuration information to the core network device in response to the second information.

20. The method of claim 19, wherein receiving the second information sent by the core network device comprises:
receiving a second request message sent by the core network device, wherein the second request message comprises the second information;
wherein sending the positioning signal configuration information to the core network device in response to the second information comprises:
sending a second response message associated with the second request message to the core network device in response to the second information, wherein the second response message comprises the positioning signal configuration information.

21. The method of claim 20, wherein the second request message is a terminal related request message.

22. The method of any one of claims 19 to 21, wherein the second information comprises at least one of:
a requested positioning signal transmission characteristic;
a requested area positioning signal indication; or
requested area information.

23. The method of claim 13 or 19, wherein determining, by the first access network device, the positioning signal configuration information associated with the valid area, comprises:
receiving available positioning signal configuration information sent by a second access network device; and
determining the positioning signal configuration information according to the available positioning signal configuration information.

24. The method of claim 13 or 19, wherein determining, by the first access network device, the available positioning signal configuration information, comprises:
receiving available positioning signal configuration information sent by a second access network device; and
sending the available positioning signal configuration information to the core network device.

25. The method of claim 23 or 24, wherein receiving the available positioning signal configuration information sent by the second access network device comprises:
sending third information to the second access network device in response to receiving the second information sent by the core network device, wherein the second information is configured to request the positioning signal configuration information associated with the valid area, and the third information is configured to request available positioning signal configuration information from the second access network device; and
receiving the available positioning signal configuration information sent by the second access network device in response to the third information.

26. The method of claim 23 or 24, wherein receiving the available positioning signal configuration information sent by the second access network device comprises:
receiving a configuration message sent by the second access network device, wherein the configuration message comprises the available positioning signal configuration information, and the configuration message is a non-terminal related message.

27. The method of claim 25, wherein determining, by the first access network device, the positioning signal configuration information according to the available positioning signal configuration information, comprises:
determining the positioning signal configuration information associated with the valid area according to the second information and the available positioning signal configuration information.

28. The method of claim 25, wherein determining, by the first access network device, the positioning signal configuration information according to the available positioning signal configuration information, comprises:
determining a to-be-confirmed positioning signal associated with the valid area according to the second information and/or the available positioning signal configuration information;
sending fourth information to the second access network device, wherein the fourth information is configured to request to confirm the to-be-confirmed positioning signal; and
taking configuration information of the to-be-confirmed positioning signal as the positioning signal configuration information associated with the valid area in response to receiving fifth information sent by the second access network device based on the to-be-confirmed positioning signal, wherein the fifth information is configured to indicate that the to-be-confirmed positioning signal is confirmed.

29. The method of claim 28, wherein the fifth information comprises at least one of:
sixth information, wherein the sixth information is configured to indicate configuration information that confirms support for the to-be-confirmed positioning signal; or
seventh information, wherein the seventh information is configured to indicate cell information that confirms support for the to-be-confirmed positioning signal.

30. The method of any one of claims 13 to 29, wherein the available positioning signal configuration information comprises available positioning signal configurations, wherein each available positioning signal configuration comprises at least one of:
available time information; or
cell information.

31. The method of any one of claims 13 to 30, wherein the positioning signal configuration information comprises at least one of:
a positioning signal configuration;
an available time of the positioning signal configuration;
an area positioning signal indication; or
area information, wherein the area information comprises at least a cell identifier list.

32. A positioning method, performed by a second access network device, comprising:
determining available positioning signal configuration information, wherein the available positioning signal configuration information is for a first access network device to determine positioning signal configuration information associated with a valid area, and the positioning signal configuration information is configured to position a terminal.

33. The method of claim 32, wherein determining the positioning signal configuration information associated with the valid area comprises:
sending the available positioning signal configuration information to the first access network device.

34. The method of claim 33, wherein sending the available positioning signal configuration information to the first access network device comprises:
receiving third information sent by the first access network device, wherein the third information is configured to request the available positioning signal configuration information; and
sending the available positioning signal configuration information to the first access network device in response to the third information.

35. The method of claim 33, wherein sending the available positioning signal configuration information to the first access network device comprises:
sending a configuration message to the first access network device, wherein the configuration message comprises the available positioning signal configuration information, and the configuration message is a non-terminal related message.

36. The method of any one of claims 32 to 35, further comprising:
receiving fourth information sent by the first access network device, wherein the fourth information is configured to request to confirm a to-be-confirmed positioning signal; and
sending fifth information to the first access network device based on the to-be-confirmed positioning signal, wherein the fifth information is configured to indicate that the to-be-confirmed positioning signal is confirmed.

37. The method of claim 36, wherein the fifth information comprises at least one of:
sixth information, wherein the sixth information is configured to indicate configuration information that confirms support for the to-be-confirmed positioning signal; or
seventh information, wherein the seventh information is configured to indicate cell information that confirms support for the to-be-confirmed positioning signal.

38. The method of any one of claims 32 to 37, wherein the positioning signal configuration information comprises at least one of:
a positioning signal configuration;
an available time of the positioning signal configuration;
an area positioning signal indication; or
area information, wherein the area information comprises at least a cell identifier list.

39. The method of any one of claims 32 to 38, wherein the available positioning signal configuration information comprises available positioning signal configurations, wherein each available positioning signal configuration comprises at least one of:
available time information; or
cell information.

40. A communication device, comprising:
a processing module, configured to determine positioning signal configuration information associated with a valid area, wherein the positioning signal configuration information is configured to position a terminal.

41. A communication device, comprising:
a processing module, configured to determine available positioning signal configuration information, wherein the available positioning signal configuration information is for an access network device to determine positioning signal configuration information associated with a valid area; and/or configured to determine positioning signal configuration information associated with a valid area, wherein the positioning signal configuration information is configured to position a terminal.

42. A communication device, comprising:
a processing module, configured to determine available positioning signal configuration information, wherein the available positioning signal configuration information is for a first access network device to determine positioning signal configuration information associated with a valid area, and the positioning signal configuration information is configured to position a terminal.

43. A communication system, comprising a core network device, a first access network device, and a second access network device, wherein the core network device is configured to implement the method of any one of claims 1 to 12, the first access network device is configured to implement the method of any one of claims 13 to 31, and the second access network device is configured to implement the method of any one of claims 32 to 39.

44. A computer-readable storage medium for storing instructions, wherein when the instructions are executed, the method of any one of claims 1 to 39 is implemented.
